# EUROPÄISCHE PATENTSCHRIFT

(11) **EP 2 340 469 B1**
(45) Veröffentlichungstag und Bekanntmachung des Hinweises auf die Patenterteilung: **25.07.2018**
(21) Anmeldenummer: 09774813.1
(22) Anmeldetag: 21.10.2009
(51) Int. Cl.: G05B 19/4093

(54) **VORRICHTUNG UND VERFAHREN ZUR STEUERUNG EINER BEARBEITUNGSANLAGE**
APPARATUS AND METHOD FOR CONTROLLING A MACHINING SYSTEM
PROCÉDÉ ET DISPOSITIF DE COMMANDE D'UNE INSTALLATION DE TRAITEMENT

(30) Priorität: 21.10.2008 DE 102008052592
(43) Veröffentlichungstag der Anmeldung: 06.07.2011
(73) Patentinhaber: TRUMPF Werkzeugmaschinen GmbH + Co. KG, 71254 Ditzingen (DE)
(72) Erfinder: HAMMANN, Gerhard, 70825 Korntal-Münchingen (DE); SZELAGOWSKI, Arnd, 73230 Kirchheim unter Teck (DE); SCHLOTTER, Mathias, 70825 Korntal-Münchingen (DE); BAUER, Klaus, 71254 Ditzingen (DE)
(74) Vertreter: Kohler Schmid Möbus Patentanwälte
(86) Internationale Anmeldenummer: PCT/DE2009/001470
(87) Internationale Veröffentlichungsnummer: WO 2010/045935

(56) Entgegenhaltungen:
- EP-A1- 0 311 703
- US-A1- 2003 023 341
- US-A1- 2003 045 964

## Beschreibung

Die Erfindung betrifft eine Vorrichtung zur Steuerung einer Laserbearbeitungsanlage mit Hilfe eines Steuerprogramms, wobei die Vorrichtung einen Datenspeicher umfasst, in dem standardmäßige Laserbearbeitungsparameter gespeichert sind, auf welche das Steuerprogramm verweist. Die Erfindung betrifft weiterhin ein Verfahren zur Steuerung einer Laserbearbeitungsanlage mit Hilfe eines Steuerprogramms, wobei standardmäßige Laserbearbeitungsparameter in einem Datenspeicher gespeichert werden und das Steuerprogramm auf die standardmäßigen Laserbearbeitungsparameter verweist.

Eine solche Steuerungsvorrichtung und ein solches Steuerungsverfahren sind durch die US 2003/045964 A1 bekannt geworden.

Die Steuerung von Bearbeitungsanlagen erfolgt mit Hilfe numerischer Steuerungen, die im Allgemeinen in drei Steuereinheiten, ein MMC-Bediensystem (Man Machine Communication) als Dateneingabe- und Visualisierungseinheit, eine SPS-Steuereinheit (speicherprogrammierbare Steuerung) und eine NC-Steuereinheit, aufgeteilt sind. Daten und Steuerbefehle werden über das MMC-Bediensystem eingegeben, an die NC-Steuereinheit weitergeleitet, in der NC-Steuereinheit decodiert und nach geometrischen und technologischen Daten (NC-Steuereinheit) und Schaltbefehlen (SPS-Steuereinheit) getrennt weiter verarbeitet. Die NC- und SPS-Steuereinheiten übermitteln den aktuellen Maschinenstatus zur Visualisierung an die MMC-Steuereinheit.

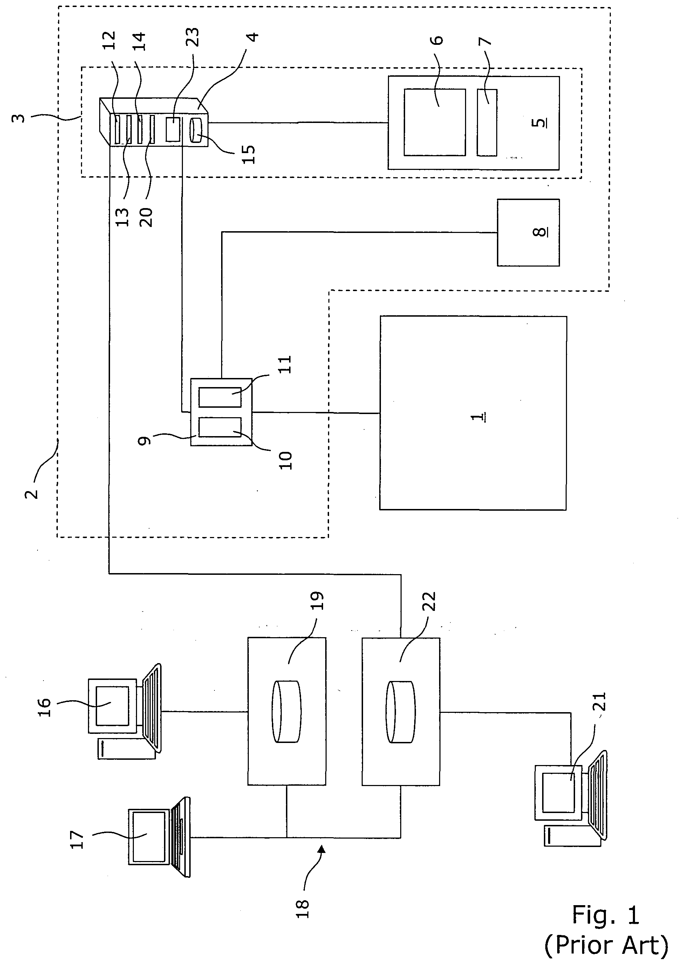

**Fig. 1** zeigt eine bekannte Bearbeitungsanlage **1,** die mit Hilfe einer numerischen Steuerungsvorrichtung **2** gesteuert wird. Die Steuerungsvorrichtung 2 umfasst hardwareseitig ein MMC-Bediensystem **3** mit einem als Industrie-PC ausgebildeten Steuerungscomputer **4** und einer Bedieneinrichtung **5** mit einem Bildschirm **6** als Anzeigeeinheit und einer Eingabeeinheit **7,** die bspw. als Tastatur, Maus oder Touchpanel ausgebildet ist. Weiterhin umfasst die Steuerungsvorrichtung 2 eine Maschinensteuertafel **8** zur manuellen Bedienung der Bearbeitungsanlage 1, wobei vor allem sicherheitsrelevante Bedienungen ausgeführt werden, und eine NCU-Baugruppe **9** (Numerical Control Unit) mit integrierter NC-Steuereinheit **10** und SPS-Steuereinheit **11.** Die NC- und SPS-Steuereinheiten 10, 11 können auch als separate Baugruppen ausgebildet sein.

Die Steuerungsvorrichtung 2 umfasst softwareseitig eine Bediensoftware **12** zur Steuerung der Bearbeitungsanlage 1, Softwaremodule **13** zur Auftragsverwaltung, Werkzeugverwaltung und Palettenverwaltung, eine Programmverwaltung **14** zur Verwaltung von Steuerprogrammen und einen Datenspeicher **15**, in dem standardmäßige Bearbeitungsparameter für die Steuerprogramme gespeichert sind. Der Begriff "Steuerprogramm" umfasst neben dem NC-Programm sämtliche Technologiedaten, die aus dem NC-Programm in externe Datenspeicher ausgelagert sind. Außerdem können weitere Anwendungen, wie bspw. ein Konstruktionssystem, ein Programmiersystem oder ein kombiniertes Konstruktions- und Programmiersystem, auf dem Steuerungscomputer 4 installiert sein.

An der Herstellung eines Bauteils auf der Bearbeitungsanlage 1 sind ein Konstrukteur, ein Programmierer und ein Maschinenbediener beteiligt, die zum Teil in Personalunion von einer oder zwei Personen ausgeübt werden können. Die Konstruktion des Bauteils erfolgt mit Hilfe eines Konstruktionssystems **16** (CAD-System) oder eines kombinierten Konstruktions- und Programmiersystems **17** (CAD-/CAM-System), wobei die Abkürzungen CAD und CAM für Computer Aided Design und Computer Aided Manufacturing stehen. Fertige Konstruktionszeichnungen werden auf einer dafür in einem Netzwerk **18** vorgesehenen gemeinsamen CAD-Datenablage **19** abgelegt, auf die die Programmierer bei Bedarf zugreifen können.

Die Bearbeitungsanlage 1 wird über Steuerprogramme gesteuert, die mit Hilfe eines Programmiersystems oder manuell an der Bedieneinrichtung 5 des MMC-Bediensystems 3 erstellt werden. Programmiersysteme kennen grundlegende und spezielle NC-Funktionen und wissen, welche Technologiedaten benötigt werden und welche Regeln für die Bearbeitung gelten. Damit können sie die Bearbeitung automatisch definieren und ein Steuerprogramm generieren. Bei dem in Fig. 1 gezeigten Ausführungsbeispiel sind neben dem kombinierten Konstruktions- und Programmiersystem 17 ein weiteres kombiniertes Konstruktions- und Programmiersystem **20** auf dem Steuerungscomputer 4 und ein Programmiersystem **21** (CAM-System) im Netzwerk 18 installiert. Die Programmiersysteme 17, 20, 21 sind mit einer CAM-Datenablage **22** verbunden, auf die die Programmierer und Maschinenbediener zugreifen können. Der Programmierer legt die fertigen Steuerprogramme in der CAM-Datenablage 22 ab. Der Maschinenbediener kann auf die CAM-Datenablage 22 zugreifen und die Steuerprogramme aus der CAM-Datenablage 22 in die Programmverwaltung 14 des Steuerungscomputers 4 importieren.

Bei der Programmierung legt der Programmierer fest, wie ein Bauteil bearbeitet wird. Er bestimmt, welche Werkzeuge eingesetzt werden, in welcher Reihenfolge die Bearbeitung erfolgt, und welche Bearbeitungsparameter bspw. für die Laserleistung und Vorschubgeschwindigkeit gelten. Programmiersysteme unterstützen den Programmierer dabei, geeignete Bearbeitungsparameter und Bearbeitungsstrategien für seine Bearbeitungsaufgabe zu finden. Die Informationen über geeignete Bearbeitungsparameter und Bearbeitungsstrategien sind in sogenannten Technologietabellen und Regelwerken enthalten, die den Datenspeicher 15 definieren. In einer Technologietabelle sind in Abhängigkeit von der Materialart, der Materialdicke und dem Bearbeitungsverfahren geeignete Bearbeitungsparameter für alle relevanten Größen hinterlegt, die eine prozesssichere Bearbeitung ermöglichen. Bei Bedarf werden Technologietabellen in Abhängigkeit weiterer Parameter definiert. Dazu gehört beim Laserschneiden bspw. die Konturgröße, die in klein, mittel und groß unterschieden wird, und der Maschinentyp, auf dem die Bearbeitung erfolgen soll.

Bei Technologietabellen wird zwischen allgemeinen, in der Regel schreibgeschützten Technologietabellen des Maschinenherstellers und kundenspezifischen Technologietabellen unterschieden. Allgemeine Technologietabellen werden vom Maschinenhersteller mit großem Aufwand ermittelt und zusammen mit der numerischen Steuerungsvorrichtung 2 der Bearbeitungsanlage 1 an die Kunden ausgeliefert. Kundenspezifische Technologietabellen können von einem Programmierer oder Maschinenbediener angelegt und verändert werden. In kundenspezifischen Technologietabellen sind auf die Bearbeitungsaufgaben eines speziellen Kunden angepasste Bearbeitungsparameter gespeichert. Die in den allgemeinen Technologietabellen gespeicherten Bearbeitungsparameter werden im Rahmen dieser Anmeldung als "standardmäßige Bearbeitungsparameter" bezeichnet.

Um die standardmäßigen Bearbeitungsparameter zu ermitteln, führen Maschinenhersteller unzählige Parametervariationen durch und bewerten die Bearbeitungsergebnisse. Die Entscheidung, welche Bearbeitungsparameter in der Technologietabelle gespeichert werden, hängt unter anderem von den Randbedingungen ab. Soll eine Bearbeitung mit höchstmöglicher Bearbeitungsqualität durchgeführt werden, ergeben sich andere Bearbeitungsparameter als bei einer Bearbeitung mit schnellstmöglicher Geschwindigkeit. Die Bearbeitungsparameter, die ein Maschinenhersteller in allgemeinen Technologietabellen angibt, stellen in der Regel einen Kompromiss verschiedener Randbedingungen, wie Qualität, Prozesssicherheit und Geschwindigkeit, dar. Dabei wissen der Programmierer und der Maschinenbediener in der Regel nicht, unter welchen Randbedingungen der Maschinenhersteller die Bearbeitungsparameter der allgemeinen Technologietabellen ermittelt hat.

Die Eigenschaften des verwendeten Materials haben wesentlichen Einfluss auf die Prozesssicherheit des Bearbeitungsprozesses und die Qualität des Bearbeitungsergebnisses. Dies kann dazu führen, dass Bearbeitungsparameter, die bei einem bestimmten Material zufriedenstellende Bearbeitungsergebnisse geliefert haben, nach einem Wechsel des Materiallieferanten oder bei einer anderen Materialcharge unzufriedenstellende Bearbeitungsergebnisse liefern, so dass eine Anpassung der Bearbeitungsparameter erforderlich wird.

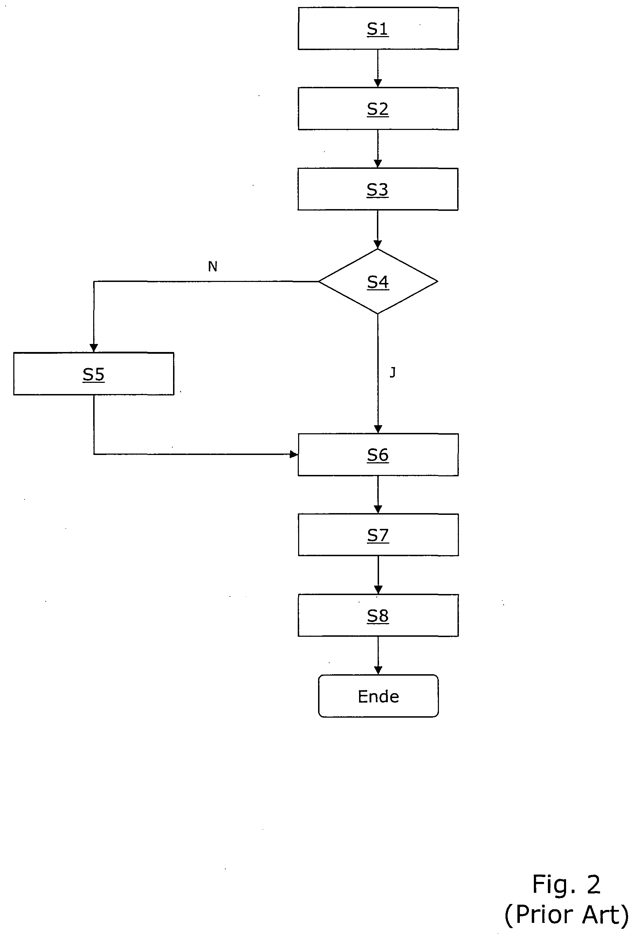

**Fig. 2** zeigt ein bekanntes Verfahren zur Steuerung einer Bearbeitungsanlage mit Hilfe der in Fig. 1 gezeigten Steuerungsvorrichtung 2 in Form eines Ablaufdiagramms.

In einem Schritt **S1** wählt der Maschinendiener in der Bediensoftware 12 der Bearbeitungsanlage 1 ein Steuerprogramm, das in der Programmverwaltung 14 gespeichert ist. Das Steuerprogramm verweist auf standardmäßige Bearbeitungsparameter, die in dem Datenspeicher 15 auf dem Steuerungscomputer 4 hinterlegt sind. Die vorgeschlagenen standardmäßigen Bearbeitungsparameter werden in einem Schritt **S2** aus dem Datenspeicher 15 in einen Speicher **23** des Steuerungscomputers 4 übertragen und in einem Schritt **S3** auf dem Bildschirm 6 der Bedieneinrichtung 5 angezeigt.

In einem Schritt **S4** entscheidet der Maschinenbediener, ob er die vorgeschlagenen standardmäßigen Bearbeitungsparameter des Datenspeichers 15 übernimmt oder Änderungen erforderlich sind. Übernimmt der Maschinenbediener die vorgeschlagenen standardmäßigen Bearbeitungsparameter nicht (N in Schritt S4), werden die Bearbeitungsparameter in einem Schritt **S5** vom Maschinenbediener verändert. Nach Schritt S5 oder wenn der Maschinenbediener die vorgeschlagenen standardmäßigen Bearbeitungsparameter des Datenspeichers 15 übernimmt (J in Schritt S4), werden die Bearbeitungsparameter in einem Schritt **S6** aus dem Speicher 23 in eine Übertragungsdatei geschrieben und gespeichert. Dabei werden die Bearbeitungsparameter so aufbereitet, dass sie von der NC-Steuereinheit 10 gelesen und verarbeitet werden können. In einem Schritt **S7** wird das Steuerprogramm und in einem Schritt **S8** die Übertragungsdatei vom Steuerungscomputer 4 an die NC-Steuereinheit 10 übertragen. Nach Schritt S8 ist das bekannte Verfahren zur Steuerung der Bearbeitungsanlage beendet.

Die Anpassung von Bearbeitungsparametern an geänderte Randbedingungen erfordert vom Programmierer und/oder vom Maschinenbediener sehr viel Erfahrung, da die Bearbeitungsparameter voneinander abhängig sind und außerdem den Bearbeitungsprozess und das Bearbeitungsergebnis in nichtlinearer Weise beeinflussen. Für unerfahrene Programmierer und Maschinenbediener ist die Gefahr, die Bearbeitungsparameter in der falschen Weise zu ändern, sehr groß. Bis ein unerfahrener Maschinenbediener die Vielzahl an Bearbeitungsparametern geeignet verändert hat, können sehr viel Zeit vergehen und unnötige Kosten durch Materialeinsatz und Maschinenzeit entstehen.

Aus der eingangs genannten US 2003/045964 A1 ist es bekannt, den Bearbeitungsprozess an das jeweilige Werkstückgewicht anzupassen, da das Werkstückgewicht die Bewegung des Werkstücks beeinflusst. Der Bediener kann zwischen unterschiedlichen Gewichtsbereichen und unterschiedlichen Konturkomplexitäten auswählen.

Aus der EP 0 311 703 A1 ist es weiterhin bekannt, die Bearbeitungsparameter "Schnittgeschwindigkeit" und "Spanquerschnitt" an die "maximal verfügbare Leistung der Maschine" anzupassen, wobei für eine gegebene Werkzeugmaschine die standardgemäßen Bearbeitungsparameter einmalig an die "maximal verfügbare Leistung der Maschine" angepasst werden.

Die Aufgabe der vorliegenden Erfindung besteht demgegenüber darin, eine Vorrichtung und ein Verfahren zur Steuerung einer Laserbearbeitungsanlage bereitzustellen, die den Programmierer und/oder den Maschinenbediener bei der Optimierung des Bearbeitungsprozesses und/oder der Bearbeitungsergebnisse unterstützen.

Diese Aufgabe wird durch eine Vorrichtung mit den Merkmalen von Anspruch 1 gelöst.

Die Anpasseinrichtung ist bevorzugt so ausgebildet, dass die standardmäßigen Laserbearbeitungsparameter zusätzlich zur Anpassung an die Prozesssicherheit an die Qualität des Bearbeitungsergebnisses und/oder die Bearbeitungsgeschwindigkeit als Zielgröße der Bearbeitung angepasst werden.

Bei einer bevorzugten Ausführungsform sind mindestens eine Detektoreinrichtung, die den Laserbearbeitungsprozess und/oder die Materialeigenschaften überwacht und ein Messsignal ermittelt, und eine mit der Detektoreinrichtung in Verbindung stehende Auswerteeinrichtung, die aus dem Messsignal der Detektoreinrichtung einen Ist-Wert für den Laserbearbeitungsprozess und/oder die Materialeigenschaften bestimmt, vorgesehen.

Die Aufgabe wird weiterhin durch ein Verfahren mit den Merkmalen von Anspruch 5 gelöst.

Die angepassten oder geänderten Laserbearbeitungsparameter werden bevorzugt von der Anpasseinrichtung berechnet und in einer Übertragungsdatei gespeichert.

In einer bevorzugten Ausführungsform des Verfahrens wird mittels einer Detektoreinrichtung ein Messsignal ermittelt und mittels einer mit der Detektoreinrichtung in Verbindung stehenden Auswerteeinrichtung ein Ist-Wert für den Laserbearbeitungsprozess und/oder die Materialeigenschaften bestimmt. Die Laserbearbeitungsparameter werden bevorzugt mit Hilfe der Anpasseinrichtung in einer voreingestellten Weise entsprechend dem von der Auswerteeinrichtung ermittelten Ist-Wert an eine vom Maschinenbediener ausgewählte Zielgröße angepasst.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine bekannte Vorrichtung zur Steuerung einer Bearbeitungsanlage;
- Fig. 2: ein bekanntes Verfahren zur Steuerung einer Bearbeitungsanlage in Form eines Ablaufdiagramms;
- Fig. 3: eine erfindungsgemäße Vorrichtung zur Steuerung einer Bearbeitungsanlage mit einer Anpasseinrichtung;
- Fig. 4: eine erste Ausführungsform eines erfindungsgemäßen Verfahrens zur Steuerung einer Bearbeitungsanlage in Form eines Ablaufdiagramms; und
- Fig. 5: eine zweite Ausführungsform eines erfindungsgemäßen Verfahrens zur Steuerung einer Bearbeitungsanlage in Form eines Ablaufdiagramms.

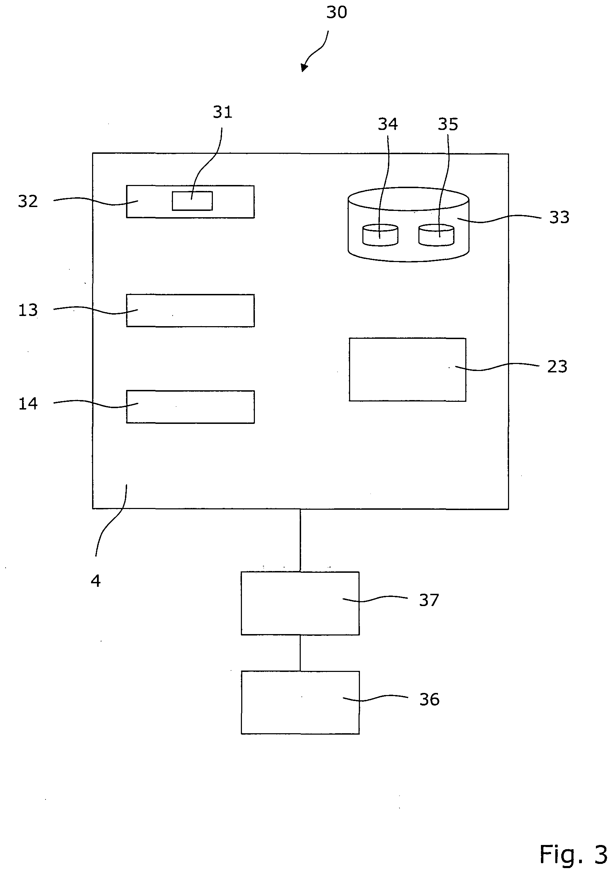

**Fig. 3** zeigt eine erfindungsgemäße Vorrichtung **30** zur Steuerung einer Bearbeitungsanlage, bei der die Bearbeitungsparameter, auf die das Steuerprogramm zugreift, mit Hilfe einer Anpasseinrichtung **31** an abweichende Materialeigenschaften des verwendeten Werkstücks oder an eine vom Maschinenbediener ausgewählte Zielgröße der Bearbeitung angepasst werden.

Die erfindungsgemäße Steuerungsvorrichtung 30 unterscheidet sich von der bekannten Steuerungsvorrichtung 2 der Fig. 1 durch eine modifizierte Bediensoftware **32** zur Steuerung der Bearbeitungsanlage 1 und einen modifizierte Datenspeicher **33,** in dem die Bearbeitungsparameter für die Steuerprogramme gespeichert sind. Die Steuerungsvorrichtung 30 umfasst softwareseitig neben der Bediensoftware 32 und dem Datenspeicher 33 wie die bekannte Steuerungsvorrichtung 2 die Softwaremodule 13 zur Auftragsverwaltung, Werkzeugverwaltung und Palettenverwaltung und die Programmverwaltung 14 zur Verwaltung der Steuerprogramme.

Die Bediensoftware 32 der Steuerungsvorrichtung 30 unterscheidet sich von der bekannten Bediensoftware 12 der Steuerungsvorrichtung 2 durch die Anpasseinrichtung 31, mit deren Hilfe die Bearbeitungsparameter an abweichende Materialeigenschaften des verwendeten Werkstücks oder an eine vom Maschinenbediener ausgewählte Zielgröße der Bearbeitung, bspw. Prozesssicherheit oder Bearbeitungsqualität, angepasst werden.

Der Datenspeicher 33 weist neben den standardmäßigen Bearbeitungsparametern des bekannten Datenspeichers 15 Korrekturregeln auf, mit denen die standardmäßigen Bearbeitungsparameter bei Aktivierung der Anpasseinrichtung 31 verändert werden, um den Bearbeitungsprozess zu verbessern oder die Qualität des Bearbeitungsergebnisses zu steigern. Die Korrekturregeln geben an, welche Bearbeitungsparameter um welchen Wert verändert werden sollen, wobei die Änderungen als absolute oder relative Werte angegeben werden können. Die angepassten Bearbeitungsparameter werden von der Anpasseinrichtung 31 aus den standardmäßigen Bearbeitungsparametern und den Korrekturregeln berechnet und im Speicher 23 des Steuerungscomputers 4 in einer Übertragungsdatei abgelegt. Die standardmäßigen. Bearbeitungsparameter sind in einer ersten Teildatenbank **34** und die Korrekturregeln in einer zweiten Teildatenbank **35** des Datenspeichers 33 gespeichert.

Die Änderung der Bearbeitungsparameter durch die Korrekturregeln kann stufenweise, d.h. in mehreren Anpassungsstufen, oder kontinuierlich erfolgen. Eine kontinuierliche Anpassung der Bearbeitungsparameter macht vor allem dann Sinn, wenn der Ist-Zustand des Bearbeitungsprozesses oder die Materialeigenschaften des verwendeten Werkstücks mit Hilfe von Detektor- und Auswerteeinrichtungen ermittelt werden. Bei der Anpassung der Bearbeitungsparameter in mehreren Anpassungsstufen werden die Bearbeitungsparameter entsprechend der ausgewählten Zielgröße in größeren Schritten verändert, um bspw. die Prozesssicherheit des Bearbeitungsprozesses zu erhöhen. Bspw. werden die Laserleistung und die Vorschubgeschwindigkeit in einer ersten Anpassungsstufe um 4 % bzw. um 10 % und in einer zweiten Anpassungsstufe um 5 % bzw. um 25 % reduziert. Es versteht sich, dass neben Laserleistung und Vorschubgeschwindigkeit ggf. weitere Bearbeitungsparameter angepasst werden müssen. Die erhöhte Prozesssicherheit der zweiten Anpassungsstufe gegenüber der ersten Anpassungsstufe erkauft sich der Maschinenbediener durch eine geringere Vorschubgeschwindigkeit und damit durch eine längere Bearbeitungszeit.

Die Steuerungsvorrichtung 30 weist außerdem eine Detektoreinrichtung **36** und eine mit der Detektoreinrichtung 36 verbundene Auswerteeinrichtung **37** auf.

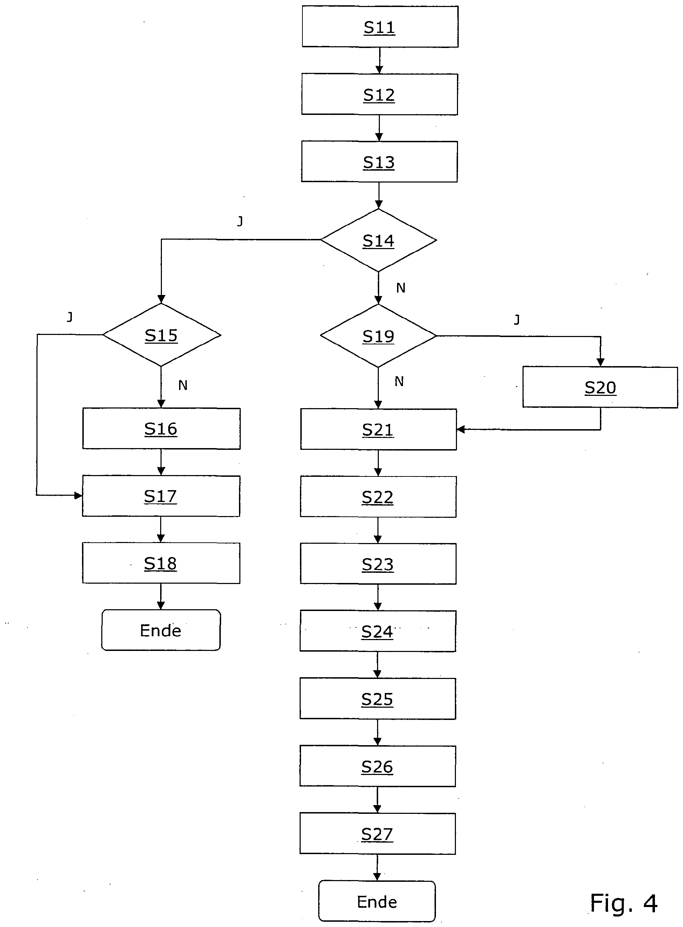

**Fig. 4** zeigt eine erste Ausführungsform eines erfindungsgemäßen Verfahrens zur Steuerung einer Bearbeitungsanlage in Form eines Ablaufdiagramms. Mit Hilfe der Anpasseinrichtung 31 der erfindungsgemäßen Steuerungsvorrichtung 30 der Fig. 3 werden die Bearbeitungsparameter an abweichende Materialeigenschaften des verwendeten Werkstücks und/oder an eine vom Maschinenbediener ausgewählte Zielgröße der Bearbeitung angepasst.

In einem Schritt **S11** wählt der Maschinendiener in der Bediensoftware 32 der Bearbeitungsanlage 1 ein Steuerprogramm, das in der Programmverwaltung 14 auf dem Steuerungscomputer 4 abgelegt ist. Das Steuerprogramm verweist auf standardmäßige Bearbeitungsparameter, die in der Teildatenbank 34 des Datenspeichers 33 hinterlegt sind. Die standardmäßigen Bearbeitungsparameter werden in einem Schritt **S12** aus dem Datenspeicher 33 in den Speicher 23 des Steuerungscomputers 4 übertragen und bei Bedarf in einem Schritt **S13** auf dem Bildschirm 6 der Bedieneinrichtung 5 angezeigt.

In einem Schritt **S14** entscheidet der Maschinenbediener, ob er die standardmäßigen Bearbeitungsparameter des Datenspeichers 33 übernimmt oder eine Anpassung der Bearbeitungsparameter mit Hilfe der Anpasseinrichtung 31 erforderlich ist. Um bewerten zu können, ob die standardmäßigen Bearbeitungsparameter für einen Bearbeitungsauftrag geeignet sind oder nicht, muss der Maschinenbediener zunächst einen Bearbeitungsauftrag durchführen und das Bearbeitungsergebnis bewerten oder aus früheren Bearbeitungsaufträgen wissen, dass die standardmäßigen Bearbeitungsparameter nicht geeignet sind.

Wenn die standardmäßigen Bearbeitungsparameter für den vorliegenden Bearbeitungsauftrag geeignet sind (J in Schritt S14), überprüft der Maschinenbediener in einem Schritt **S15,** ob die Anpasseinrichtung 31 deaktiviert ist. Wenn die Anpasseinrichtung 31 nicht deaktiviert ist (N in Schritt S15), deaktiviert der Maschinenbediener die Anpasseinrichtung 31 in einem Schritt **S16.**

Nach Schritt S16 oder wenn die Anpasseinrichtung 31 deaktiviert ist (J in Schritt S15), wird das erfindungsgemäße Verfahren mit den Schritten **S17** und **S18** fortgesetzt, die den Schritten S6 und S7 des in Fig. 2 gezeigten bekannten Steuerungsverfahren entsprechen. Die standardmäßigen Bearbeitungsparameter werden in Schritt S17 aus dem Speicher 23 des Steuerungscomputers 4 in die Übertragungsdatei geschrieben. In Schritt S18 werden das Steuerprogramm und die Übertragungsdatei vom Steuerungscomputer 4 an die NC-Steuereinheit 10 übertragen. Nach Schritt S18 ist das erfindungsgemäße Verfahren zur Steuerung der Bearbeitungsanlage beendet.

Wenn die standardmäßigen Bearbeitungsparameter für den vorliegenden Bearbeitungsauftrag nicht geeignet sind (N in Schritt S14), überprüft der Maschinenbediener in einem Schritt **S19,** ob die Anpasseinrichtung 31 deaktiviert ist. Wenn die Anpasseinrichtung 31 deaktiviert ist (J in Schritt S19), aktiviert der Maschinenbediener die Anpasseinrichtung 31 in einem Schritt **S20.**

Nach Schritt S20 oder wenn die Anpasseinrichtung 31 aktiviert (nicht deaktiviert) ist (N in Schritt S19), entscheidet der Maschinenbediener in einem Schritt **S21,** an welche Zielgröße die Bearbeitungsparameter angepasst werden sollen: Soll beispielsweise die Prozesssicherheit des Bearbeitungsprozesses erhöht, die Bearbeitungsqualität verbessert oder die Bearbeitungsgeschwindigkeit erhöht werden?

In einem Schritt **S22** schlägt die Anpasseinrichtung 31 dem Maschinenbediener mehrere Anpassungsstufen zu der gewählten Zielgröße vor. Der Maschinenbediener legt in einem Schritt **S23** die Anpassungsstufe fest, gemäß der die Bearbeitungsparameter angepasst werden. In einem Schritt **S24** berechnet die Anpasseinrichtung 31 die angepassten Bearbeitungsparameter, die der eingestellten Anpassungsstufe entsprechen, und zeigt die angepassten Bearbeitungsparameter auf dem Bildschirm 6 der Bedieneinrichtung 5 an. Die angepassten Bearbeitungsparameter werden aus den standardmäßigen Bearbeitungsparametern, die in Schritt S13 aus dem Datenspeicher 33 in den Speicher 23 des Steuerungscomputers 4 übertragen wurden, und den Korrekturregeln berechnet. Der Maschinenbediener gibt die angepassten Bearbeitungsparameter in einem Schritt **S25** frei. In einem Schritt **S26** werden die angepassten Bearbeitungsparameter in die Übertragungsdatei geschrieben und gespeichert.

Die Bediensoftware startet in einem Schritt **S27** die Übertragung der angepassten Bearbeitungsparameter an die NC-Steuereinheit 10. Nach Schritt S27 ist das erfindungsgemäße Verfahren zur Steuerung der Bearbeitungsanlage beendet.

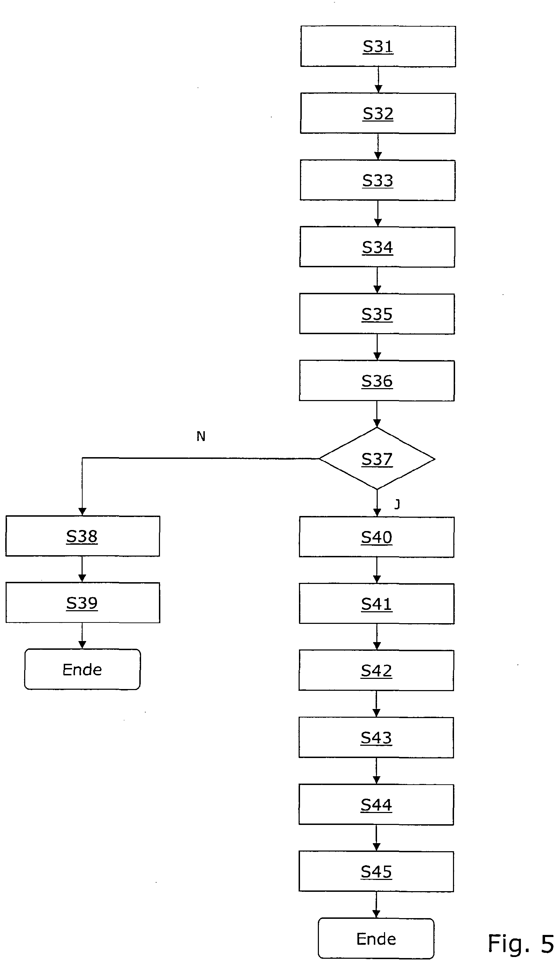

**Fig. 5** zeigt eine zweite Ausführungsform eines erfindungsgemäßen Verfahrens zur Steuerung einer Bearbeitungsanlage 1 in Form eines Ablaufdiagramms, bei dem die Eigenschaften des verwendeten Materials mit der Detektoreinrichtung 36 gemessen und mit der mit der Detektoreinrichtung 36 verbundenen Auswerteeinrichtung 37 bewertet wird.

In einem Schritt **S31** startet der Maschinendiener in der Bediensoftware 32 der Bearbeitungsanlage 1 ein Steuerprogramm, das in der Programmverwaltung 14 auf dem Steuerungscomputer 4 abgelegt ist. Das Steuerprogramm verweist auf standardmäßige Bearbeitungsparameter, die in einem Schritt **S32** aus dem Datenspeicher 33 in den Speicher 23 des Steuerungscomputers 4 übertragen und in einem Schritt **S33** auf dem Bildschirm 6 der Bedieneinrichtung 5 angezeigt werden.

In einem Schritt **S34** aktiviert der Maschinenbediener die Detektor- und Auswerteeinrichtungen 36 und 37, die in einem Schritt **S35** einen Ist-Wert bestimmen, der die Eigenschaften des Materials widerspiegelt. Anhand des von der Auswerteeinrichtung 37 ermittelten Ist-Wertes erhält der Maschinenbediener in einem Schritt **S36** eine Empfehlung, ob die Bearbeitungsparameter aufgrund abweichender Materialeigenschaften angepasst werden sollten. Der Maschinenbediener entscheidet in einem Schritt **S37,** ob eine Anpassung der Bearbeitungsparameter erfolgen soll.

Wenn keine Anpassung der Bearbeitungsparameter erfolgen soll (N in Schritt S37), wird das Verfahren mit den Schritten **S38** und **S39** fortgesetzt, die den Schritten S6 und S7 des in Fig. 2 gezeigten bekannten Steuerungsverfahren entsprechen. In Schritt S38 werden die standardmäßigen Bearbeitungsparameter aus dem Speicher 23 des Steuerungscomputers 4 in die Übertragungsdatei geschrieben und in Schritt S39 werden das Steuerprogramm und die Übertragungsdatei vom Steuerungscomputer 4 an die NC-Steuereinheit 10 übertragen. Nach Schritt S39 ist das erfindungsgemäße Verfahren zur Steuerung der Bearbeitungsanlage beendet.

Wenn die Bearbeitungsparameter an die abweichenden Materialeigenschaften angepasst werden sollen (J in Schritt S37), aktiviert der Maschinenbediener die Anpasseinrichtung 31 in einem Schritt **S40.** Die Anpasseinrichtung 31 schlägt dem Maschinenbediener in einem Schritt **S41** eine Anpassungsstufe vor, gemäß der die Bearbeitungsparameter an die abweichenden Materialeigenschaften angepasst werden.

Neben einer Anpassung der Bearbeitungsparameter in mehreren Anpassungsstufen können die Bearbeitungsparameter auch kontinuierlich angepasst werden, wobei jedem von der Auswerteeinrichtung 37 bestimmten Ist-Wert ein Parametersatz von Korrekturregeln in einer voreingestellten Weise zugeordnet ist. Die stufenweise Anpassung der Bearbeitungsparameter hat gegenüber der kontinuierlichen Anpassung den Vorteil, dass nur einige Parametersätze an Korrekturregeln ermittelt und abgespeichert werden müssen. Demgegenüber hat die kontinuierliche Anpassung der Bearbeitungsparameter den Vorteil, dass die Änderung der Bearbeitungsparameter nahezu optimal an die abweichenden Materialeigenschaften angepasst ist.

In einem Schritt **S42** berechnet die Anpasseinrichtung 31 die angepassten Bearbeitungsparameter, die der eingestellten Anpassungsstufe entsprechen, und zeigt die angepassten Bearbeitungsparameter auf dem Bildschirm 6 der Bedieneinrichtung 5 an. Der Maschinenbediener gibt die angepassten Bearbeitungsparameter in einem Schritt **S43** frei. In einem Schritt **S44** werden die angepassten Bearbeitungsparameter in die Übertragungsdatei geschrieben und gespeichert. Die Bediensoftware 32 startet in einem Schritt **S45** die Übertragung der angepassten Bearbeitungsparameter an die NC-Steuereinheit 10. Nach Schritt S45 ist das erfindungsgemäße Verfahren zur Steuerung der Bearbeitungsanlage beendet.

## Patentansprüche

1. Vorrichtung (30) zur Steuerung einer Laserbearbeitungsanlage (1) mit Hilfe eines Steuerprogramms, wobei die Vorrichtung einen Datenspeicher (33) umfasst, in dem standardmäßige Laserbearbeitungsparameter gespeichert sind, auf welche das Steuerprogramm verweist,
**dadurch gekennzeichnet,**
**dass** die Vorrichtung (10) eine Korrekturregeln umfassende Anpasseinrichtung (31) umfasst, die aktivierbar ist,
mit der die standardmäßigen Laserbearbeitungsparameter gemäß den Korrekturregeln in einer voreingestellten Weise sowohl an die Materialart und Materialdicke eines zu bearbeitenden Werkstücks angepasst als auch stufenweise oder kontinuierlich verändert werden, um die Prozesssicherheit der Laserbearbeitung in Schritten oder kontinuierlich zu verändern, wobei dass Steuerprogramm auf die angepassten oder geänderten Laserbearbeitungsparameter zugreift.

2. Steuerungsvorrichtung nach Anspruch 1, **dadurch gekennzeichnet, dass** die Anpasseinrichtung (31) so ausgebildet ist, dass die standardmäßigen Laserbearbeitungsparameter zusätzlich zur Anpassung an die Prozesssicherheit an die Qualität des Bearbeitungsergebnisses und/oder die Bearbeitungsgeschwindigkeit angepasst werden.

3. Steuerungsvorrichtung nach Anspruch 1 oder 2, **dadurch gekennzeichnet, dass** die Korrekturregeln für die standardmäßigen Laserbearbeitungsparameter in dem Datenspeicher (33) gespeichert sind.

4. Steuerungsvorrichtung nach einem der vorhergehenden Ansprüche, **dadurch gekennzeichnet, dass** mindestens eine Detektoreinrichtung (36), die den Laserbearbeitungsprozess und/oder die Materialart und Materialdicke überwacht und ein Messsignal ermittelt, und eine mit der Detektoreinrichtung (36) in Verbindung stehende Auswerteeinrichtung (37), die aus dem Messsignal der Detektoreinrichtung (36) einen Ist-Wert für den Laserbearbeitungsprozess und/oder die Materialart und Materialdicke des zu bearbeitenden Werkstücks bestimmt, vorgesehen sind.

5. Verfahren zur Steuerung einer Laserbearbeitungsanlage (1) mit Hilfe eines Steuerprogramms, wobei standardmäßige Laserbearbeitungsparameter in einem Datenspeicher (33) gespeichert werden und das Steuerprogramm auf die Laserbearbeitungsparameter verweist,
**dadurch gekennzeichnet,**
**dass** die standardmäßigen Laserbearbeitungsparameter mit Hilfe einer Korrekturregeln umfassenden Anpasseinrichtung (31) gemäß den Korrekturregeln in einer voreingestellten Weise sowohl an die Materialart und Materialdicke eines zu bearbeitenden Werkstücks angepasst als auch stufenweise oder kontinuierlich verändert werden, um die Prozesssicherheit der Laserbearbeitung in Schritten oder kontinuierlich zu verändern, und
**dass** das Steuerprogramm auf die angepassten oder geänderten Laserbearbeitungsparameter zugreift.

6. Verfahren nach Anspruch 5, **dadurch gekennzeichnet, dass** die angepassten oder geänderten Laserbearbeitungsparameter von der Anpasseinrichtung (31) berechnet und in einer Übertragungsdatei gespeichert werden.

7. Verfahren nach einem der Ansprüche 5 oder 6, **dadurch gekennzeichnet, dass** mittels einer Detektoreinrichtung (36) ein Messsignal ermittelt und mittels einer mit der Detektoreinrichtung (36) in Verbindung stehenden Auswerteeinrichtung (37) ein Ist-Wert für den Laserbearbeitungsprozess und/oder die Materialart und Materialdicke des zu bearbeitenden Werkstücks bestimmt wird.

8. Verfahren nach Anspruch 7, **dadurch gekennzeichnet, dass** die standardmäßigen Laserbearbeitungsparameter mit Hilfe der Anpasseinrichtung (31) in einer voreingestellten Weise entsprechend dem von der Auswerteeinrichtung (37) ermittelten Ist-Wert angepasst oder geändert werden.

## Claims

1. Apparatus (30) for controlling a laser machining system (1) by means of a control program, wherein the apparatus comprises a data storage (33), in which standard laser machining parameters are stored to which the control program refers,
**characterized in that** the apparatus (30) comprises an adjustment device (31) which comprises correction rules and can be activated, by means of which the standard laser machining parameters are adjusted in a preset fashion to the material type and the material thickness of a workpiece to be processed in accordance with the correction rules, and are also changed in steps or continuously in order to change the process safety of the laser machining in steps or continuously, wherein the control program accesses the adjusted or changed laser machining parameters.

2. Control apparatus according to claim 1, **characterized in that** the adjustment device (31) is designed in such a fashion that the standard laser machining parameters are also adjusted, in addition to the adjustment to the process safety, to the quality of the machining result and/or to the machining speed.

3. Control apparatus according to claim 1 or 2, **characterized in that** the correction rules for the standard laser machining parameters are stored in the data storage (33).

4. Control apparatus according to any one of the preceding claims, **characterized in that** at least one detector device (36) is provided, which monitors the laser machining process and/or the material type and the material thickness and determines a measuring signal, and **in that** an evaluation device (37) is provided, which communicates with the detector device (36) and determines from the measuring signal of the detector device (36) an actual value for the laser machining process and/or the material type and the material thickness of the workpiece to be processed.

5. Method for controlling a laser machining system (1) by means of a control program, wherein standard laser machining parameters are stored in a data storage (33) and the control program refers to the laser machining parameters,
**characterized in that**
the standard laser machining parameters are adjusted in a preset fashion to the material type and the material thickness of a workpiece to be processed by means of an adjustment device (31) comprising correction rules in accordance with the correction rules, and are also changed in steps or continuously to change the process safety of the laser machining in steps or continuously, and the control program accesses the adjusted or changed laser machining parameters.

6. Method according to claim 5, **characterized in that** the adjusted or changed laser machining parameters are calculated by the adjustment device (31) and are stored in a transmission file.

7. Method according to any one of the claims 5 or 6, **characterized in that** a measuring signal is determined by means of a detector device (36) and an actual value for the laser machining process and/or the material type and the material thickness of the workpiece to be processed is determined by means of an evaluation device (37) which communicates with the detector device (36).

8. Method according to claim 7, **characterized in that** the standard laser machining parameters are adjusted or changed in a preset fashion in accordance with the actual value determined by the evaluation device (37), by means of the adjustment device (31).

## Revendications

1. Dispositif (30) de commande d'une installation (1) d'usinage au laser à l'aide d'un programme de commande, sachant que le dispositif comprend une mémoire de données (33) dans laquelle sont mémorisés des paramètres standards d'usinage au laser auxquels se réfère le programme de commande,
**caractérisé en ce que** le dispositif (30) comprend un équipement d'adaptation (31), comprenant des règles de correction, qui peut être activé et avec lequel les paramètres standards d'usinage au laser peuvent être, conformément aux règles de correction et d'une manière préréglée, aussi bien adaptés au type de matériau et à l'épaisseur de matériau d'une pièce à usiner que modifiés par paliers ou en continu afin de modifier par étapes ou en continu la sécurité du processus de l'usinage au laser, sachant que le programme de commande se sert des paramètres adaptés ou modifiés d'usinage au laser.

2. Dispositif de commande selon la revendication 1, **caractérisé en ce que** l'équipement d'adaptation (31) est réalisé de telle sorte que les paramètres standards d'usinage au laser sont, en plus de l'adaptation à la sécurité du processus, adaptés à la qualité du résultat d'usinage et/ou à la vitesse d'usinage.

3. Dispositif de commande selon la revendication 1 ou 2, **caractérisé en ce que** les règles de correction pour les paramètres standards d'usinage au laser sont mémorisées dans la mémoire de données (33).

4. Dispositif de commande selon l'une des revendications précédentes, **caractérisé en ce qu'**il est prévu au moins un équipement détecteur (36), qui surveille le processus d'usinage au laser et/ou le type de matériau et l'épaisseur de matériau et définit un signal de mesure, et un équipement d'évaluation (37), qui se trouve en liaison avec l'équipement détecteur (36) et qui, à partir du signal de mesure de l'équipement détecteur (36), détermine une valeur effective pour le processus d'usinage au laser et/ou le type de matériau et l'épaisseur de matériau de la pièce à usiner.

5. Procédé de commande d'une installation (1) d'usinage au laser à l'aide d'un programme de commande, sachant que des paramètres standards d'usinage au laser sont mémorisés dans une mémoire de données (33) et que le programme de commande se réfère aux paramètres d'usinage au laser,
**caractérisé en ce que** les paramètres standards d'usinage au laser sont, à l'aide d'un équipement d'adaptation (31) comprenant des règles de correction, conformément aux règles de correction et d'une manière préréglée, aussi bien adaptés au type de matériau et à l'épaisseur de matériau d'une pièce à usiner que modifiés par paliers ou en continu afin de modifier par étapes ou en continu la sécurité du processus de l'usinage au laser,
et **en ce que** le programme de commande se sert des paramètres adaptés ou modifiés d'usinage au laser.

6. Procédé selon la revendication 5, **caractérisé en ce que** les paramètres adaptés ou modifiés d'usinage au laser sont calculés par l'équipement d'adaptation (31) et mémorisés dans un fichier de transmission.

7. Procédé selon l'une des revendications 5 ou 6, **caractérisé en ce qu'**on définit un signal de mesure au moyen d'un équipement détecteur (36) et, au moyen d'un équipement d'évaluation (37) se trouvant en liaison avec l'équipement détecteur (36), on détermine une valeur effective pour le processus d'usinage au laser et/ou le type de matériau et l'épaisseur de matériau de la pièce à usiner.

8. Procédé selon la revendication 7, **caractérisé en ce que**, à l'aide de l'équipement d'adaptation (31), on adapte ou modifie les paramètres standards d'usinage au laser d'une manière préréglée en fonction de la valeur effective déterminée par l'équipement d'évaluation (37).
